# EUROPEAN PATENT APPLICATION

(11) **EP 2 434 154 A1**
(43) Date of publication of application: **28.03.2012**
(21) Application number: 10180998.6
(22) Date of filing: 28.09.2010
(51) Int. Cl.: F03D 11/02

(54) **Wind turbine active damping arrangement**

(71) Applicant: Siemens Aktiengesellschaft, 80333 München (DE)
(72) Inventor: Wohlleb, Matthias, 52064, Aachen (DE); Ventzke, Klaus, 52379, Langerwehe (DE)

(57) **Abstract**

The invention concerns a wind turbine active damping arrangement (11) for damping forces exerted on a component (20) connected to a main shaft (13) of a wind turbine (10), which active damping arrangement (11) comprises a smart fluid damper (1), and which active damping arrangement (11) comprises a control means (80) for controlling a field generator (8) of the smart fluid damper (1) to control the extent of damping according to a performance parameter of the wind turbine (10). The invention also describes a smart fluid damper for such a wind turbine active damping arrangement (11) for active damping of forces exerted on a component (20, 21) of a wind turbine (10), which smart fluid damper (1) comprises a closed chamber (7) containing a smart fluid (3) and a piston, which piston (2) realised to travel along a direction of travel in the chamber (7), and which piston (2) comprises at least one channel (4) through which the smart fluid (3) can flow; a field generator (8) for generating a field (F) across the smart fluid (3); and an input for a field generator control signal (88) for controlling the field generator (8) to alter the field (F) according to a performance parameter of the wind turbine (10). The invention also describes a wind-turbine bearing arrangement and a method of actively damping forces exerted on a component (20) of a wind turbine (10).

## Description

The invention describes a wind turbine active damping arrangement, a magnetorheological damper, a wind-turbine bearing arrangement, and a method of actively damping forces exerted on a component of a wind turbine.

The drive train of a wind turbine is generally supported by a bedplate in a nacelle. Basically, there are two established ways of supporting the drive train on the bedplate. In a three-point arrangement, one large main bearing such as a roller bearing is used to carry the main shaft. In a four-point arrangement, the main bearing comprises two bearings, of which one is close to the hub, and the other is close to the gearbox and serves to load or absorb most of the axial forces acting on the main shaft. In both of these prior art concepts, the connecting component between the main shaft and bedplate is the main bearing, and the connecting component between the gearbox and the bedplate is an elastic damper. The gearbox is supported in the vertical direction, for example by an elastomeric damper mounted between a torque arm and a raised side of the bedplate, so that the gearbox is effectively suspended between the raised sides of the bedplate. The task of the torque arm is to support the gearbox against the torsion of the rotor. The elastic damper mounted to the torque arm of the gearbox is usually connected to the ring gear of a planet stage.

Large forces are transferred from the blades of the wind turbine to the main shaft during operation. Yawing of the main shaft leads to deformation of the bedplate. In case of a four-point arrangement, in which main shaft is supported by two bearings, the gearbox is given a higher axial stiffness. This measure reduces the constraints pertaining to yawing. However, in both three-point and four-point arrangements, nodding moment of the drive train due to bedplate deformation leads to movement of the gearbox in vertical direction while the turbine is in operation. However, the prior art dampers are unable to completely absorb this nodding moment, so that the gearbox still has an undesirable degree of freedom in the axial direction. The resulting pronounced vertical (up and down) movement or nodding moment is the main cause of damage to the main bearing, the gearbox and to components of the gearbox such as planet carrier, planet bearing, planet and ring gear.

To avoid such damage, the wind turbine elements are subject to many design constraints. Generally, the components and the dampers must be designed for maximum or worst-case loads, even though such loads are only occasionally experienced during 'normal' operation of the wind turbine. For example, the rigidity, stiffness or weight of certain elements may be increased. Furthermore, additional design constraints may be included to take into account any errors in the assembly process. However, such designs may result in an increase of the extreme load on drive-train components, so that these may be damaged or their life expectancy may be reduced.

It is therefore an object of the invention to provide an improved damper for a wind turbine.

This object is achieved by the wind turbine active damping arrangement of claim 1, by the smart fluid damper of claim 7, by the wind-turbine bearing arrangement of claim 11, and by the method of claim 14 of actively damping forces exerted on a component of a wind turbine.

According to the invention, the wind turbine active damping arrangement for damping forces exerted on a component connected to a main shaft of a wind turbine comprises a smart fluid damper and a control means for controlling a field generator of the smart fluid damper to control the extent of damping according to a performance parameter of the wind turbine.

An obvious advantage of the wind turbine active damping arrangement according to the invention is that the extent of the required damping for the component connected to the main shaft can be directly derived from the performance parameter, and the field generator of the smart fluid damper can be controlled accordingly. Since the response time of an field generator can be very short, the smart fluid damper can react essentially immediately to any change in performance parameter, and the required momentary damping can therefore also be obtained essentially immediately. In this way, any rapid fluctuation in the forces exerted on the component - for example nodding moment or yaw moment - can be optimally absorbed or reduced by the smart fluid damper.

According to the invention, the smart fluid damper for such a wind turbine active damping arrangement, for active damping of forces exerted on a component of a wind turbine, comprises
- a closed chamber containing a smart fluid and a piston, which piston is realised to travel along a direction of travel in the chamber, and which piston comprises at least one channel through which the smart fluid can flow;
- a field generator for generating a field across the smart fluid; and
- an input for a field generator control input for inputting a control signal to the field generator to alter the field according to a performance parameter of the wind turbine.

According to the invention, the wind-turbine bearing arrangement for bearing the drive train of the wind turbine on a bedplate comprises a main bearing for bearing the main shaft, and an active damping arrangement according to the invention for bearing a component connected to the main shaft, which active damping arrangement comprises such a smart fluid damper connecting the component to the bedplate.

According to the invention, the method of actively damping forces exerted on a component of a wind turbine comprises the steps of
- obtaining a performance parameter of the wind turbine;
- generating a control signal for such an active damping arrangement on the basis of the performance parameter; and
- applying the control signal to control a field generator of a smart fluid damper of the active damping arrangement.

In the method according to the invention, the extent of the required damping can be derived from the performance parameter, so that any momentary damping is optimally applied. Over the lifetime of the wind turbine, such an active damping method can ensure that the amount of distortion of the nacelle bedplate or damage to a component connected between the main shaft of the wind turbine and the bedplate is kept to a favourable minimum or prevented altogether.

Particularly advantageous embodiments and features of the invention are given by the dependent claims, as revealed in the following description. Features of the embodiments described may be combined in any appropriate manner to give further embodiments not described herein.

The smart fluid damper used in a wind turbine active damping arrangement is essentially a hydraulic damper that contains a fluid with magnetorheological (MR) and/or electrorheological (ER) properties. In the case of an MR fluid, the smart fluid comprises very many tiny magnetic dipoles (e.g. carbonyl iron powder) suspended in a non-magnetic carrier fluid such as oil. In the case of an ER fluid, the smart fluid comprises a suspension of very small non-conducting particles suspended in an electrically insulating fluid such as oil. The viscoelastic properties of the smart fluid can be very rapidly altered by applying a field across the fluid. For example, when a magnetic field is applied across a magnetorheological fluid, the magnetic particles align themselves along the magnetic field lines, thus altering the apparent viscosity of the smart fluid. Similarly, when an electric field is applied across an electrorheological fluid, dielectric particles form chains in line with the electric field, so that the apparent viscosity of the smart fluid increases. The fluid may comprise additional additives such as Extreme Pressure (EP) additives such as sulphur/phosphor compounds to prevent fusion of burrs during mixed friction, or polydimethylsiloxane (PDMS) to prevent foaming of the fluid, and/or Viscosity Improving (VI) additives (long-chain polymers) to increase viscosity of the fluid, etc. The particles in the fluid react within a fraction of a second to any changes in the field. The strength of the field may be directly proportional to the achieved damping. For example, in the case of a magnetorheological damper, if the magnetic field lines are orthogonal to the direction of motion of the hydraulic damper, the application of a magnetic field can act as a brake on the hydraulic damper and can therefore lead to an increase in the damping effect. Equally, by removing or reducing the magnetic field, the damping effect can be decreased. Preferably, the channels in the piston are arranged in the direction of travel of the piston. For example, the piston of a smart fluid damper used to absorb vertical forces would comprise a number - preferably a plurality - of channels arranged vertically in the body of the piston. A favourably even and balanced motion of the piston can be achieved with a symmetrical arrangement of channels. For example, depending on the dimensions of the piston, it may comprise twelve, twenty or any number of evenly spaced channels arranged in a circular fashion about a central axis of the piston.

In the following, without restricting the invention in any way, it may be assumed that the smart fluid damper is a magnetorheological damper, that the smart fluid comprises a magnetorheological fluid with a suspension of very small dipoles, and that the field applied across the magnetorheological fluid comprises a magnetic field. For simplicity, the magnetorheological damper may be referred to as an 'MR-damper' and the magnetorheological fluid may be referred to as an 'MR-fluid'

As mentioned in the introduction, it would be advantageous to reduce or eliminate damage to the nacelle bedplate as a result of the large forces arising during operation of the wind turbine. Such damage can arise when forces acting on a component fastened to the bedplate cause the bedplate to be distorted. Therefore, in a preferred embodiment of the invention, the component comprises a gearbox of the wind turbine, and the MR-damper is arranged to absorb vertical forces transferred between the gearbox and the bedplate of the wind turbine.

An established type of wind turbine construction comprises a planetary gearbox connected to the main shaft by means of a shrink disc and a torque arm. To absorb rotational torque transferred from the main shaft to the gearbox in prior art solutions, the torque arm is generally connected to the nacelle bedplate using some kind of damper, such as a hydraulic damper or an elastomeric damper. As explained above, the very strong forces arising during operation of the wind turbine can exceed the damping capabilities of the prior art damping solutions (which react too slowly to a sudden increase in force), so that the bedplate is subject to distortional damage. In a preferred embodiment of the invention therefore, the MR-damper is arranged between a torque arm of the gearbox and the bedplate of the wind turbine to absorb vertical forces acting between the torque arm and the nacelle bedplate. For example, the MR-damper can be mounted between an existing bolt extending horizontally through the torque arm and the nacelle bedplate. No constructional alterations would be required, so that a wind turbine can be upgraded very economically with the active damping arrangement according to the invention.

Preferably, the extent of damping of the active damping arrangement according to the invention is controlled according to the momentary load situation of the wind turbine. The forces acting on the elements of the wind turbine are generally directly related to the wind speed, which ultimately determines the rotational speed of the spinner and therefore the rotor. The speed of the rotor is directly related to the rotor torque, which in turn determines the forces acting on the component being damped by the active damping arrangement according to the invention. Therefore, in a particularly preferred embodiment of the invention, the active damping arrangement comprises a sensing arrangement for sensing a performance parameter of the wind turbine. Preferably, the sensing arrangement comprises a torque sensor for measuring torque acting on the main shaft of the wind turbine and/or a speed sensor for measuring a rotational speed of the main shaft of the wind turbine. Performance parameters or information pertaining to the momentary dynamic behaviour of the wind turbine can be easily obtained using such sensors, which are already included for monitoring purposes in most wind turbine designs. A value or signal provided by such a sensor can be interpreted by a control unit in an open electromechanical control loop to calculate the momentary stiffness requirement of the MR-damper. A suitable control signal is forwarded from the control unit to the electromagnetic device of the MR-damper to adjust its momentary damping properties.

The control unit preferably controls the electromagnetic device of the MR-damper according to the dynamic behaviour of the drive train. In a particularly preferred embodiment of the invention, the electromagnetic device comprises an electromagnetic coil realized to generate an electromagnetic field when electric current flows through the coil. Using the information about the performance parameters delivered from a sensor such as a torque or speed sensor, the control unit calculates the current required to generate a specific magnetic field to counteract the forces being exerted on the damper, and delivers a corresponding signal to control the electromagnetic device, which in turn generates a magnetic field of the required strength across the MR-fluid of the MR-damper. The apparent viscosity of the MR-fluid is altered within a fraction of a second, thus essentially immediately adjusting the damping strength of the MR-damper. For example, at low wind speeds and therefore under low load conditions, the viscous oil of the smart fluid may be sufficient to damp any vertical forces exerted on the torque arm. In this case, the control unit need not excite the electromagnetic coil. As soon as the wind speed picks up or the torque increases, the sensors deliver almost instantaneous measurements to the control unit, which reacts by causing an electromagnetic field to be generated across the smart fluid. At once, the dipoles align themselves to the field lines and increase the damping effect. Similarly, a sudden drop in wind speed or a sudden decrease in torque can be detected so that the electromagnetic field is reduced, thus quickly decreasing the damping effect.

The electromagnetic coil can be incorporated in the damper in any suitable manner. For example, a piston with an embedded coil could be used. However, such a design may be more expensive, requiring custom-made pistons and an access means for a wire or cable between the control unit and the coil. Therefore, in a particularly preferred embodiment of the invention, the electromagnetic coil is arranged in or on a housing of the damper. For example, the coil could be incorporated in the walls of the housing or wrapped around the outside of the housing. In such a design, the coil can easily be applied to an existing hydraulic damper, which need only be filled with a suitable MR-fluid in order to act as an MR-damper. Furthermore, the coil can easily be replaced or adjusted to improve the damping properties of the MR-damper should the need arise.

Of course, the control loop can also be a closed-loop control. To this end, in a further preferred embodiment of the invention, the active damping arrangement according to the invention preferably comprises a feedback sensor for generating a feedback signal according to the extent of damping of the MR-damper, which feedback signal is forwarded to the control means. Such a feedback sensor can be a travel sensor located for example in the MR-damper itself, and can measure the extent of travel of a moving part of the MR-damper such as the piston. The sensor can be mounted on any suitable surface, and can be realized to measure the velocity of the moving piston relative to the stationary chamber. Such a sensor can be operated on any suitable principle, for example it may be realized as a potentiometer to measure an electrical resistance, as an ultrasonic transceiver to measure the echo of reflected sound waves, etc.

Controlling the damping properties of the active damping arrangement in this way allows the design constraints of the drive train to be relaxed, thus allowing a more economical realization of the drive train and the main bearing(s). Unlike in prior art designs, the components do not have to be constructed for maximum (worst-case) load, since the damping properties of the active damping arrangement according to the invention can be adjusted as required. By relaxing these constraints, a 'lighter' design is possible, thus reducing the overall loading of the drive-train components, so that these are less liable to be subject to damage and their life expectancy can be favourably prolonged.

As mentioned in the introduction, there are a number of established bearing designs for the drive train of a wind turbine. The amount of damping required in a vertical direction between the gearbox and the bedplate will to a large extent depend on the manner in which the main shaft is borne. In one embodiment of the invention, the wind-turbine bearing arrangement comprises a three-point bearing. Since the main shaft is carried by a single main bearing, considerable axial and rotational forces can be expected to act on the gearbox. Therefore, in such an embodiment, the active damping arrangement preferably comprises a horizontal arrangement of MR-dampers connecting the gearbox to the nacelle bedplate in an axial direction. For a torque arm comprising a bolt on each side of the main shaft, this embodiment comprises two MR-dampers connected fore and aft of the torque arm bolt, between a raised side of the bedplate and the gearbox, so that a total of four MR-dampers (two on each side of the torque arm) are used to absorb vertical as well as axial forces. In another preferred embodiment of the invention, in such a three-point arrangement, one or more of the MR-dampers is preferably augmented by an additional conventional elastomeric socket to further absorb the axial forces exerted on the gearbox. For example, an elastomeric socket can be located underneath the MR-damper, between the housing of the MR-damper and the raised bedplate part.

In another embodiment of the invention, the wind-turbine bearing arrangement comprises a four-point bearing. Since the main shaft is carried by two main bearings, the gearbox is subject to less axial forces. The active damping arrangement in such an embodiment comprises a vertical arrangement of MR-dampers connecting the gearbox to the raised sides of the nacelle bedplate. For a torque arm comprising a bolt on each side of the main shaft, this embodiment comprises a vertical, essentially linear arrangement of a first MR-damper below a torque arm bolt and a second MR-damper above that torque arm bolt, so that a total of four MR-dampers (two on each side of the torque arm) are used to absorb vertical forces.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 is a simplified representation of the components of a wind turbine;
Fig. 2 shows a front view of some of the components of Fig. 1;
Fig. 3 shows a schematic representation of a smart fluid damper for a gearbox of a wind turbine, in a first embodiment of a bearing arrangement according to the invention;
Fig. 4 shows a more detailed view of the smart fluid damper of Fig 2;
Fig. 5 shows a schematic representation of a smart fluid damper for a gearbox of a wind turbine, in a second embodiment of a bearing arrangement according to the invention;
Fig. 6 shows a further embodiment of a smart fluid damper in an active damping arrangement according to the invention.

In the diagrams, like numbers refer to like objects throughout. Objects in the diagrams are not necessarily drawn to scale.

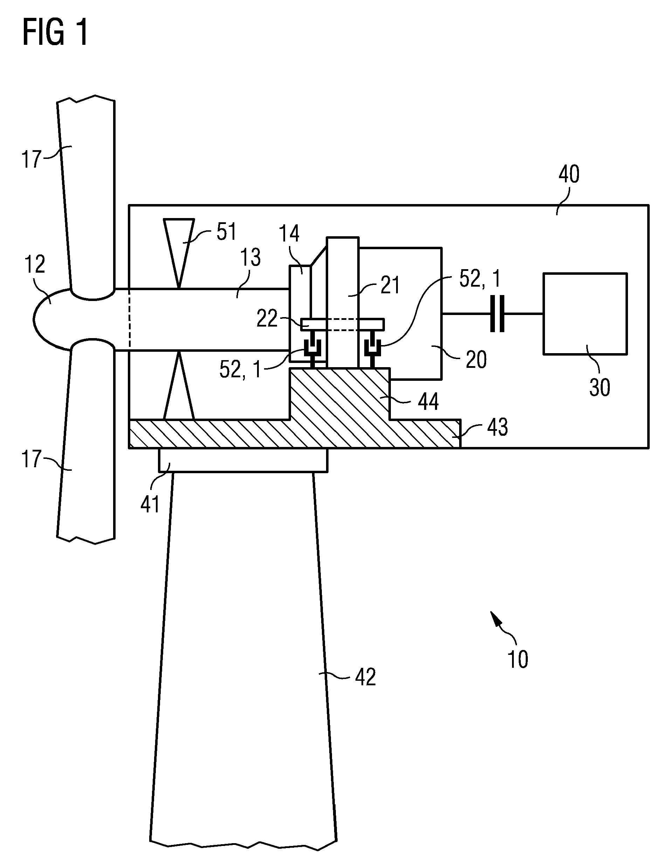

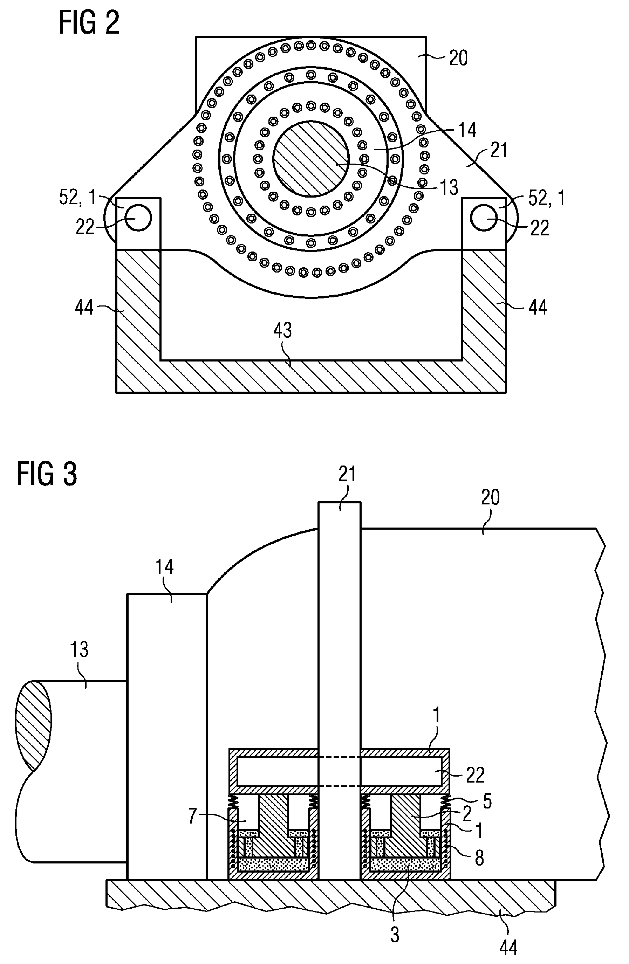

Fig. 1 shows a very simplified representation of the components of a wind turbine 10 used in the generation of electricity. In a nacelle 40 mounted on a tower 42, a rotor 13 or main shaft 13 is caused to rotate by pressure applied to a plurality of blades 17 connected to a spinner 21. The rotating main shaft 13 is connected to a gearbox 20 by means of a shrink disc 14 and a torque arm 21. The gearbox in turn is coupled to a generator 30. The components mentioned above must all be secured in some way to a nacelle bedplate 43, 44. The main shaft 13 is typically borne by a main bearing 51 such as a fluid bearing or a roller bearing which rests on the bedplate floor 43. The gearbox 21, which is essentially mounted on the end on the main shaft, does not rest on the floor of the bedplate 43, but is supported laterally, usually on a raised frame of the bedplate 43, by additional bearings or dampers 52, 1. To this end, a robust bolt 22 extends through the torque arm 21 (one bolt 22 on each side of the torque arm 21) and is mounted securely in the housing of the damper 52, 1. In a prior art wind turbine, such dampers 52 can be elastomeric sockets 52, conventional hydraulic dampers 52, etc. This embodiment shows a three-point bearing given by the main bearing 51 and two pairs of dampers 52,1, one pair on each side of the gearbox 20, as shown in the front view of Fig. 2. This diagram shows the gearbox 20 and torque arm 21 supported by a pair of bolts 22 held in dampers 52, 1 that rest on raised sides 44 of the bedplate 43. The gearbox 20 is effectively suspended over the bedplate 43. In the three-point bearing, the pair of dampers 52, 1 arranged fore and aft of each bolt 22 serves to absorb the yaw moment to a certain extent, in addition to absorbing the nodding moment. In the present invention, these dampers comprise smart fluid dampers 1, as will be explained below.

Fig. 3 shows a schematic representation of a smart fluid damper 1 for a gearbox 20 of a wind turbine, in a three-point bearing arrangement, for example for use in a wind turbine in the 2 megawatt range. The diagram shows the main shaft 13 connected to the gearbox 20 by means of the shrink disc 14 and the torque arm 21. A lateral bolt 22 extending through the front and back faces of the torque arm 21 is connected at each end to the raised bedplate side 44 by means of two MR-dampers 1 (the gearbox 20 and torque arm 21 are suspended in air above the bedplate floor as shown in Fig. 2 above). Each damper 1 comprises a piston 2 enclosed in a chamber 7 of a closed housing 6. During operation, vertical motion of the gearbox 20 causes the piston 2 to move vertically in the chamber 7. Channels in the piston 2 allow this to move vertically through an MR-fluid 3 containing very many magnetic dipoles, which are indicated - greatly exaggerated - by the dots in the fluid 3. Although fasteners are not shown in the diagram, it may be assumed that the housing 6 is firmly bolted or otherwise secured to the raised bedplate frame 44.

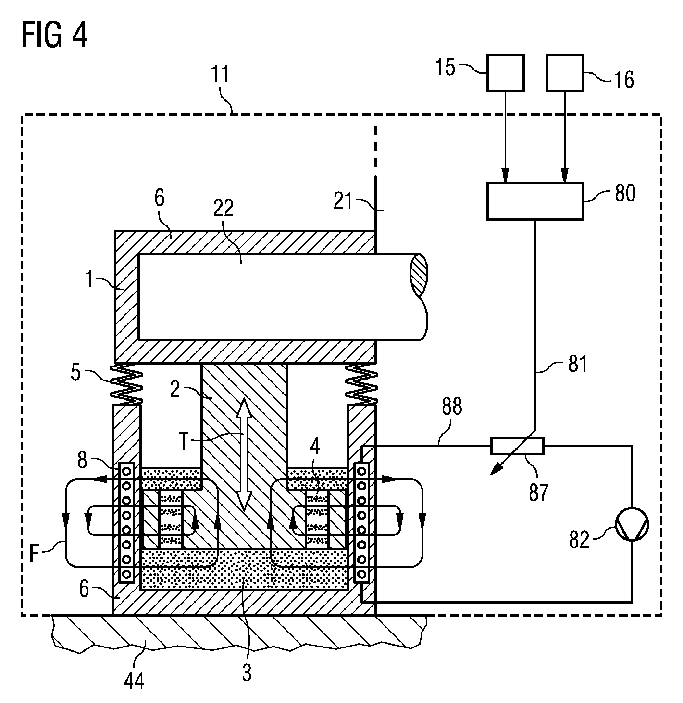

Fig. 4 shows a more detailed view of an MR-damper 1 in an active damping arrangement 11 according to the invention. The piston 2 is free to move in the direction of travel T on account of a plurality of vertical channels 4 arranged symmetrically about the body of the piston 2. A bellows 5 forms a flexible seal between the stationary and moving parts of the damper 1. The speed of motion of the piston 2 is controlled by the viscosity of the smart fluid 3. This in turn is controlled by the current through an electromagnetic coil 8. The current through the coil 8 is increased or decreased according to a control signal 81 generated in a control unit 80 in response to a value of rotational velocity measured by a speed sensor 15 and/or a value of torque measured by a torque sensor 16. An electromagnetic field F generated by the coil 8 results in field lines (here only a few field lines are shown) which lie essentially horizontally across the fluid and therefore also across the channels 4 of the piston 2. In the presence of the magnetic field F, the dipoles of the smart fluid align themselves to the magnetic field lines, as indicated by the transverse 'layers' of dipoles in the diagram. As a result, the apparent viscosity of the fluid 3, particularly in the channels 4, is increased and the speed of the piston 2 decreases accordingly. In this way, the vertical motion of the gearbox 20 can be effectively damped or regulated. Furthermore, since the torque and rotational velocity can be continually monitored, the corresponding control signal 81 and the magnetic field F can be generated very quickly, and the dipoles in the smart fluid 3 respond essentially immediately to a change in magnetic field, a 'real time' response to any sudden alteration in torque or velocity can be achieved, thus providing excellent damping for the gearbox, minimized distortion to the bedplate, and a prolonged lifetime of the relevant components.

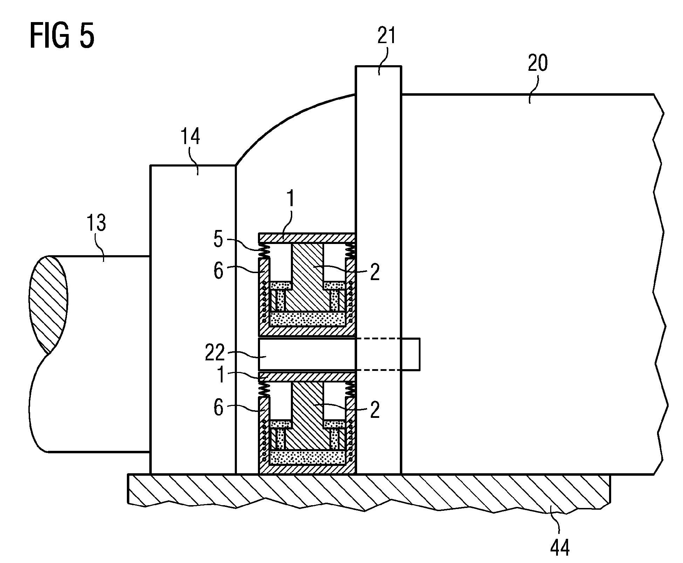

Fig. 5 shows another embodiment of the wind-turbine active damping arrangement 11 according to the invention, this time as a four-point bearing, for example for use in a larger wind turbine such as a 3.5 megawatt turbine. Here, the main shaft 13 is borne by two main bearings (not shown in the diagram), so that the gearbox is not subject to any significant yaw moment. Therefore, the damping of forces exerted on the gearbox 20 can be favourably concentrated in the vertical direction. To this end, a pair of MR dampers 1 according to the invention is arranged vertically above and below the bolt 22 of the torque arm 21 (another such pair is connected to the bolt on the other side of the torque arm 21, which cannot be seen in this diagram). The coil of the MR-damper 1 can be incorporated in the piston 2, in a wall of the housing 6 (as shown here), or wrapped around the housing 6, as appropriate.

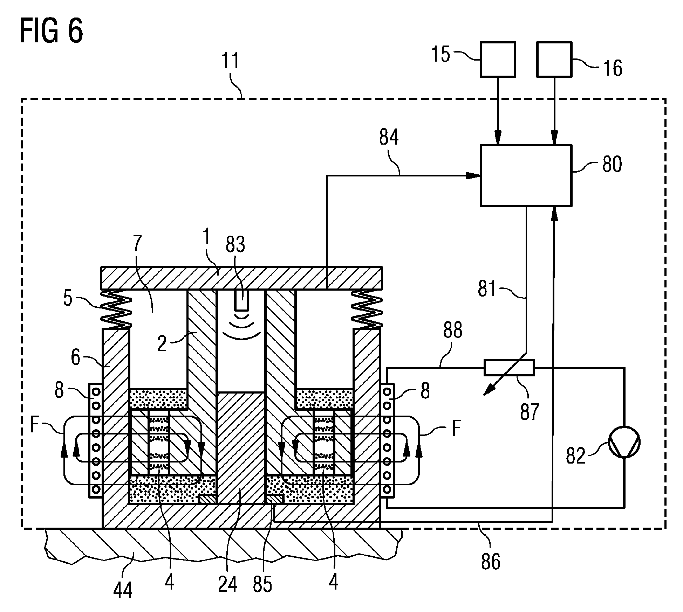

Fig. 6 shows a further embodiment of a smart fluid damper 1 in an active damping arrangement 11 according to the invention. In this embodiment, the coil 8 is wrapped around the outside of the housing 6. The piston 2 is hollow and can move vertically along a piston guide 24 arranged within the hollow interior. The damper 1 also includes a sensor 83 for detecting the speed of travel of the piston 2, for example an ultrasonic transceiver 83 shown here to be mounted on the underside of the 'lid' of the damper housing 6 (which lid moves together with the piston 2). The sensor 83 is directed the stationary piston guide 24 and generates a feedback signal 84 for the control unit 80. In an alternative design, the motion sensor 83 could be mounted on top of the stationary piston guide 24 and directed at the inside of the damper housing lid. In this embodiment, the damper 1 also includes a limit stop 85 that detects when the piston 2 has reached the limit of its travel and forwards an appropriate signal 86 to the control unit 80. A torque sensor 16 and a wind speed sensor 14 measure the main shaft torque and wind speed respectively, and provide their measurements to the control unit 80. This is realized to analyse these inputs and to generate an appropriate control signal 81, which in turn controls a power supply 82 (in this case by means of a potentiometer 87) so that a specific electrical current is delivered via a field generator control signal 88 through the coil 8. Each damper 1 of an active damping arrangement 11 can be equipped with its own control unit 80 and its own power supply regulator 87. For example, four MR-dampers can all be controlled by a single control unit 80, which supplies control signals to four regulators, and a shared power supply can be electrically connected to the coils of each of the dampers. Alternatively, in a simpler arrangement without feedback sensors or limit stops, a single regulator can be used to control each of the field generators.

Although the present invention has been disclosed in the form of preferred embodiments and variations thereon, it will be understood that numerous additional modifications and variations could be made thereto without departing from the scope of the invention. For example, the smart fluid damper can also comprise a limit stop, which can for example be located on the outer face of the piston or on an inner wall of the housing, so that the range of motion of the piston is subject to a predefined limit. This may serve to protect the damper from an overly extreme motion during adverse operating conditions.

For the sake of clarity, it is to be understood that the use of "a" or "an" throughout this application does not exclude a plurality, and "comprising" does not exclude other steps or elements.

## Claims

1. A wind turbine active damping arrangement (11) for damping forces exerted on a component (20, 21) connected to a main shaft (13) of a wind turbine (10), which active damping arrangement (11) comprises a smart fluid damper (1), and which active damping arrangement (11) comprises a control means (80) for controlling a field generator (8) of the smart fluid damper (1) to control the extent of damping according to a performance parameter of the wind turbine (10).

2. An active damping arrangement according to claim 1, wherein the component (20) comprises a gearbox (20) of the wind turbine (10), and the smart fluid damper (1) is arranged to absorb forces transferred to the gearbox (20) from the main shaft (13) and/or the bedplate (43, 44) of the wind turbine (10).

3. An active damping arrangement according to claim 2, wherein the smart fluid damper (1) is arranged between a torque arm (21) of the gearbox (20) and the bedplate (43, 44) of the wind turbine (10).

4. An active damping arrangement according to any of the preceding claims, comprising a sensing arrangement (15, 16) for sensing a performance parameter of the wind turbine (10).

5. An active damping arrangement according to claim 4, wherein the sensing arrangement (15, 16) comprises a torque sensor (16) for measuring a torque acting on the main shaft (13) of the wind turbine (10) and/or a speed sensor (14) for measuring a rotational velocity of the main shaft (13) of the wind turbine (10).

6. An active damping arrangement according to any of the preceding claims, comprising a feedback sensor (83) for generating a feedback signal (84) according to the extent of damping of the smart fluid damper (1), which feedback signal (84) is forwarded to the control means (80).

7. A smart fluid damper (1) for a wind turbine active damping arrangement (11) according to any of claims 1 to 6, for active damping of forces exerted on a component (20) of a wind turbine (10), which smart fluid damper (1) comprises
- a closed chamber (7) containing a smart fluid (3) and a piston, which piston (2) realised to travel along a direction of travel in the chamber (7), and which piston (2) comprises at least one channel (4) through which the smart fluid (3) can flow;
- a field generator (8) for generating a field (F) across the smart fluid (3); and
- an input for a field generator control signal (88) for controlling the field generator (8) to alter the field (F) according to a performance parameter of the wind turbine (10).

8. A smart fluid damper according to claim 7, wherein the smart fluid (3) comprises a magnetorheological fluid (3), and the field generator (8) comprises an electromagnetic coil (8) realized to generate an electromagnetic field (F) across the magnetorheological fluid (3) when electric current flows through the coil (8).

9. A smart fluid damper according to claim 8, wherein the electromagnetic coil (8) is incorporated in a housing (6) of the damper (1).

10. A smart fluid damper according to any of claims 7 to 9, comprising a travel sensor (83) for generating a feedback signal (84) according to the extent of travel of the piston (2).

11. A wind-turbine bearing arrangement for bearing the drive train of the wind turbine (10) on a bedplate (43, 44), which bearing arrangement comprises a main bearing (51) for bearing the main shaft (13), and an active damping arrangement (11) according to any of claims 1 to 6 for bearing a component (20, 21) connected to the main shaft (13), which active damping arrangement (11) comprises a smart fluid damper (1) according to any of claims 7 to 10 connecting the component (20, 21) to the bedplate (43, 44).

12. A wind-turbine bearing arrangement according to claim 11, wherein the wind-turbine bearing arrangement comprises a three-point bearing, and wherein the active damping arrangement (11) comprises a horizontal arrangement of two smart fluid dampers (1) between a torque arm bolt (22) and the bedplate (44).

13. A wind-turbine bearing arrangement according to claim 11, wherein the wind-turbine bearing arrangement comprises a four-point bearing, and wherein the active damping arrangement (11) comprises a vertical arrangement of a first smart fluid damper (1) below a torque arm bolt (22) and a second smart fluid damper (1) above the torque arm bolt (22).

14. A method of actively damping forces exerted on a component (20) of a wind turbine (10), which method comprises the steps of
- obtaining a performance parameter of the wind turbine (10);
- generating a control signal (81) for an active damping arrangement (11) according to any of claims 1 to 6 on the basis of the performance parameter; and
- applying the control signal (81) to control a field generator (8) of a smart fluid damper (1), according to any of claims 7 to 10, of the active damping arrangement (11).
